# EUROPEAN PATENT SPECIFICATION

(11) **EP 2 263 224 B1**
(45) Date of publication and mention of the grant of the patent: **30.09.2015**
(21) Application number: 09723758.0
(22) Date of filing: 27.03.2009
(51) Int. Cl.: G08G 1/017, G08G 1/04, G06K 19/06

(54) **VEHICLE IDENTIFICATION SYSTEM**
FARHZEUGIDENTIFIKATIONSSYSTEM
SYSTÈME D'IDENTIFICATION DE VÉHICULE

(30) Priority: 28.03.2008 GB 0805715
(43) Date of publication of application: 22.12.2010
(73) Proprietor: 3M Innovative Properties Company, Saint Paul, MN 55133-3427 (US)
(72) Inventor: SMITH, Brian, David, Vincent, West Sussex BN11 5SE (GB)
(74) Representative: Boult Wade Tennant
(86) International application number: PCT/GB2009/000819
(87) International publication number: WO 2009/118534

(56) References cited:
- WO-A-91/10213
- WO-A-03/017193
- DE-A1- 10 243 492
- US-A- 4 908 500
- US-A1- 2006 071 077
- KALISKI B: "A SURVEY OF ENCRYPTION STANDARDS" IEEE MICRO, IEEE SERVICE CENTER, LOS ALAMITOS, CA, US, vol. 13, no. 6, 1 December 1993 (1993-12-01), pages 74-81, XP000418401 ISSN: 0272-1732

## Description

The present invention relates to a vehicle identification system. In particular, the invention relates to a system which identifies vehicles by reading a registration plate and a barcode on the vehicle.

It is desirable to automatically and reliably identify a vehicle. It is known from GB 2,425,385 to use a camera to record an image of a registration plate on a vehicle, and automatically analyse the image to extract the vehicle registration number using optical character recognition. The extracted vehicle registration number is not always accurate, due to imperfections on the recorded image and/or limitations in the software used to recognise the vehicle registration number. A false registration plate could be attached to a vehicle, for which the automated system has no provision to check.

It is also known to identify a vehicle using a barcode, for example from EP 1,246,118. Barcodes are also well known for encoding identifying information on a product, in particular an inventory control code which is unrelated to a code printed elsewhere on the product.

Documents DE 10243492 A1 and US 4908500 A describe systems wherein a barcode placed on a vehicle is read by an external camera.

The present invention provides in a first aspect, a vehicle identification system as defined in appended claim 1.

The present invention provides in a second aspect, a method of identifying a vehicle as defined in appended claim 10.

Thus, the barcode and vehicle registration plate duplicate the vehicle registration number in a form which can be reliably read. This provides a check on whether the vehicle registration plate is attached to the correct vehicle.

The present invention will now be described, by way of example only, with reference to the following drawings:
Figure 1 is a perspective view of the present invention;
Figure 2 is a plan view of a barcode according to the present invention;
Figure 3 is a schematic diagram of the barcode of the present invention.

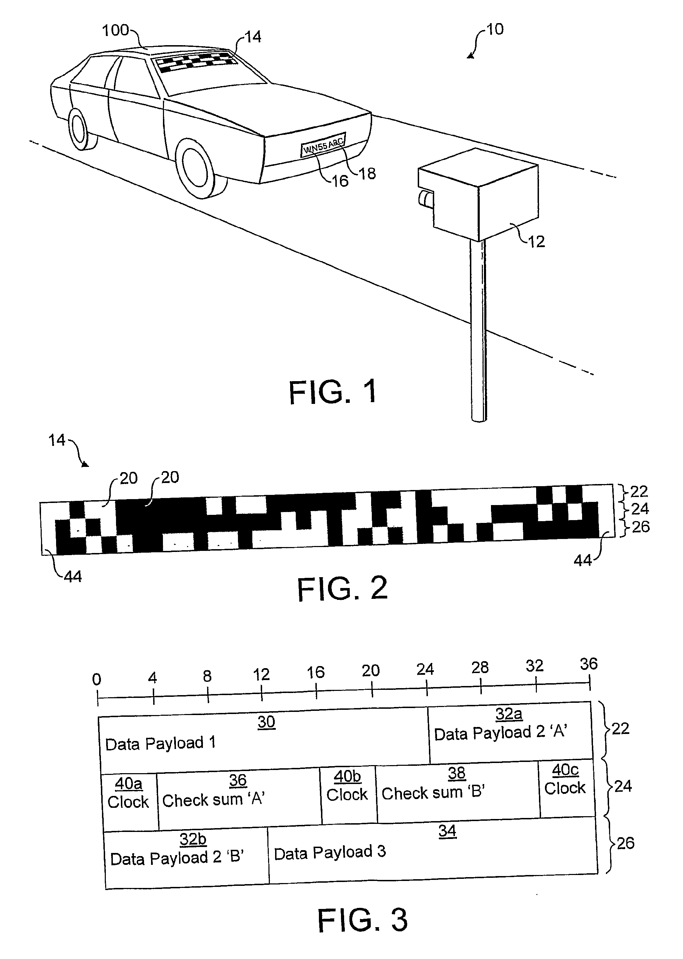

With reference to Figure 1, a vehicle identification system 10 is shown. The system 10 includes a stationary camera system 12 arranged to produce an image of a vehicle 100 passing on a road. Alternatively, the camera system 12 may be a portable system. The vehicle identification system 10 further comprises a barcode 14 attachable to the vehicle 100 and visible to the camera system 12. The vehicle identification system further comprises a registration plate 16 having a vehicle registration number 18 formed of alphanumeric characters which are visible to the camera system 12.

The camera system 12 is preferably a video camera, preferably using a charge coupled device (CCD) sensor that is sensitive to infrared light. The camera system 12 includes light emitting diodes (LEDs) to provide illumination for the camera. The camera system 12 includes a processor adjacent to the sensor which is arranged to analyse images from the camera, in particular to read the barcode 14 and perform character recognition on the vehicle registration number 18.

The vehicle registration number 18 can contain a variety of different combinations of letters and numbers, depending on the country, date of registration or personalisation. In the UK, the most common and maximum number of characters is seven.

The barcode 14 encodes the vehicle registration number 18. The barcode 14 is in the form of a strip preferably 230mm in length and 23mm in height. This is mounted at the top of a windscreen of the vehicle, on the "dark" area present on many vehicles. The barcode may be attached with an adhesive. The barcode is separate from the registration plate, and located on a spaced apart part of the vehicle. This allows the barcode to be positioned in an area which can be easily imaged by the sensor. The separation of the barcode from the registration plate ensures that the barcode does not interfere with the conventional character recognition of the vehicle registration number 18. Alternatively, the barcode 14 may be located on the vehicle registration plate, and the character recognition modified to take account of its presence. The barcode may be printed on a retro-reflective strip.

The barcode 14 may encode only the vehicle registration number 18, i.e. include no further information. The barcode 14 may additionally encode information on the country of registration of the vehicle. The barcode 14 does not include any vehicle unique identifiers apart from the encoded vehicle registration number, in particular, there is no further number which could be used to identify the vehicle on a database separate from the vehicle registration number database.

An alphanumeric character is generally encoded in binary as 8 bits. A seven character registration number would therefore be expected to occupy 56 bits. The barcode 14 of the present invention encodes a seven character registration number as 32 bits. This is possible since not all combinations of standard alphanumeric characters are used in registration numbers, and certain combinations of characters are not used.

To produce the barcode 14, a reversible algorithm converts the vehicle registration number into a unique 32 bit identifying number, and so compresses the registration number to 32 bits. The processor in the camera system 12 operates the reverse algorithm to convert the identifying number into the vehicle registration number. There is no central database storing the identifying number encoded on the barcode 14 to the vehicle registration, the relationship is achieved through the reversible algorithm. Four bits identifying the country of registration may be added to the 32 bits of identifying number to generate a 36 bit word as the data payload. The number of bits used for the identifying number and additional data are an example only, and smaller or larger numbers of bits for each may be used.

With reference to Figure 2, barcode 14 is formed of a series of areas which are reflective and non-reflective to infrared light. The barcode 14 is preferably a two-dimensional barcode, having reflective and non-reflective areas, each representing a bit 20. In particular, the barcode 14 may have a width of 36 bits and a height of 3 bits, formed into a upper line 22, central line 24 and lower line 26.

The barcode 14 includes error correction bits in order to reliably read the coded data, and provide verification that the vehicle registration number has being correctly read.

With reference Figure 3, the 36 bits of data are split into three 12 bit words. An extended binary Golay code, an error correcting code, is added to each 12 bit word to produce three 24 bit words 30,32,34. The Golay error correcting code can correct up to 3 bit errors in each 12 bit word. The three 24 bit words are arranged on the upper and lower lines 22,26 of the barcode 14, with the second word 32a,32b split equally between the top and bottom lines and arranged so that no part of the second word 32a,32b is vertically above another part. This improves the resilience to errors from vertically aligned faults.

The error correction code could be overwhelmed if too many bit errors are present. To check if large numbers of errors are present, the barcode 14 includes an alternative representation of the vehicle registration number, which is independent of the main data payload and error correction. The independent representation is preferably in the form of a checksum 36,38 of the vehicle registration number.

The barcode 14 preferably includes a 12 bit checksum 36 on the central line 24, which can provide error detection to one part in 2¹². To avoid the checksum being incorrectly read the checksum is combined with a 12 bit extended binary Golay code 38 to provide the same level of error correction as used for the main data.

In order to improve reading of the checksum 36 with error correction, clock sections are incorporated into the barcode 14. Clock sections 40a,40c are at the left and right ends of the central line 24, and a clock section 40b is at the centre of the central line 24. The left clock section used is: 0101, where black (non-reflective) is "0" and white (reflective) is "1". The right end clock section is transposed into 1010. This enables the clock section to be easily found from either end of the barcode. The central clock section may be either of these forms.

The barcode 14 preferably also includes white lead-in bits 44 at the left and right ends to simplify detection of the barcode, and guarantee a white to black transition at either end of the barcode.

In use, a barcode 14 is manufactured encoding a vehicle registration number, and optionally country data, as the identifying number using the algorithm.

The vehicle 100 drives past the stationary camera 12. Alternatively, the vehicle 100 may be stationary, and a portable camera taken to the vehicle 100. An image or images of the vehicle is obtained by the sensor, and analysed by a processor in the camera system. The processor locates the vehicle registration plate on the image(s), and carries out automatic character recognition on the image of the characters of the registration number to generate machine-editable text.

The processor also locates the barcode 14, and reads the binary bits on the barcode. The identifying number is extracted from the bits, and converted by the algorithm into the vehicle registration number. The checksum is extracted (having been error corrected) and compared to another checksum (locally generated by the processor in the camera system) of the recovered vehicle registration number to check that the vehicle registration number has been correctly read and decoded from the identifying number. Alternatively, the checksum could be used to check the accuracy of the coded data, i.e., the identifying number before it is converted by the algorithm into the vehicle registration number and/or any additional encoded data. The checksum can be run on the whole 36 bits of data or any subset of it for which protection is required either in encoded or extracted format.

The vehicle registration number from the registration plate 16 is compared to the vehicle registration number from the barcode 14. If they are the same, there is a high level of certainty in the reading of the vehicle registration number. The certainty is given by the checksum, and for a 12 bit checksum the chance of error is 1 in 4096, giving an accuracy of 99.975%. This is higher than could be achieved by reading the registration plate 16 alone. If the vehicle registration number from the registration plate 16 is different to the vehicle registration number from the barcode 14 this may indicate that the registration plate has been swapped with another plate, or that one or more of the registration number characters have been incorrectly read.

The registration plate and barcode have been described as recorded in an image. This may be a single image, or may be a series of images. In particular, the registration plate and barcode may be recorded in different images or in the same image. The image may be focussed on a part of the vehicle where the barcode and/or registration plate are expected, and/or may be an overview of the whole image.

The Country identifying data in the barcode may be replaced or supplemented with vehicle class data identifying the class of vehicle, or other information about the vehicle. In particular, additional information relating to visible features of the vehicle may be included, e.g., colour or number of axles.

The barcode has been described as being two-dimensional with three lines. Alternatively, the barcode may be one-dimensional and take any conventional form. Alternatively, the barcode may be two-dimensional and have two, four or any other number of lines.

## Claims

1. A vehicle identification system comprising:
a registration plate (16) mountable on a vehicle (100) and having alphanumeric characters indicating a vehicle registration number (18);
a barcode (14) mountable on a vehicle, the barcode (14) encoding the vehicle registration number (18) of the registration plate (16), and including a checksum (36, 38) to verify that the vehicle registration number (18) has been correctly read from the barcode (14),
a camera (100) arranged to record in one or more image(s) the registration plate (16) and the barcode (14); and
an analyser arranged to receive the one or more images and automatically extract the vehicle registration number (18) from the registration plate (16) shown in the one or more images, to automatically extract the vehicle registration number (18) from the barcode (14) shown in the one or more images; and to use the checksum (36, 38) to verify that the vehicle registration number (18) has been correctly read from the barcode (14),
the analyser comparing the vehicle registration number (18) extracted from the registration plate (16) with the vehicle registration number (18) extracted from the barcode (14) to thereby determine whether the vehicle registration number (18) indicated on the registration plate is the same as the vehicle registration number (18) encoded on the barcode (14),
wherein:
the barcode (14) includes error correction bits for error correction of both the vehicle registration number (18) and the checksum (36, 38); and
the analyser is arranged to error correct both the vehicle registration number (18) and the checksum (36, 38) using the error correction bits.

2. A vehicle identification system as claimed in claim 1 wherein the barcode (14) is a two-dimensional barcode.

3. A vehicle identification system as claimed in any one of the preceding claims wherein the vehicle registration number (18) is encoded in the barcode (14) by a reversible algorithm which assigns a unique identifying number to each vehicle registration number (18), wherein that unique identifying number is encoded in the barcode (14),
and the analyser is arranged to use the algorithm on the unique identifying number extracted from the barcode (14) to generate the vehicle registration number (18).

4. A vehicle identification system as claimed in claim 3 wherein the identifying number is 32 bits.

5. A vehicle identification system as claimed in claim 1 wherein the encoded vehicle registration number (18) is split into two or more words, each word including separate error correction, and the words arranged over two or more lines of the two-dimensional barcode.

6. A vehicle identification system as claimed in claim 5 wherein at least one word is split between two lines of the two-dimensional barcode and arranged such that no part of that word is vertically aligned with a part of itself.

7. A vehicle identification system as claimed in any one of the preceding claims wherein the barcode (14) includes a plurality of clock sections.

8. A vehicle identification system as claimed in any one of the preceding claims wherein the barcode (14) also encodes a geographical identifier indicating a place of registration and/or a vehicle class identifier indicating a class of the vehicle (100).

9. A vehicle identification system as claimed in any one of the preceding claims wherein the barcode (14) is separate from the registration plate (16).

10. A method of identifying a vehicle having a registration plate (16) with alphanumeric indicia indicating a vehicle registration number (18), and a barcode (14) encoding the vehicle registration number and including a checksum (36, 38) and error correction bits,
the method comprising:
recording in one or more images the registration plate (16) and the barcode (14) using a camera (12) that records both the registration plate (16) and the barcode (14) ;
analysing the one or more images to extract the vehicle registration number (18) from the image of the registration plate (16);
extracting the vehicle registration number (18) from the barcode (14) shown in the one or more images;
using the checksum (36, 38) to verify that the vehicle registration number (18) has been correctly read from the barcode (14);
using the error correction bits to error correct both the vehicle registration number (18) extracted from the barcode (14) and the checksum (36, 38); and
comparing the vehicle registration number (18) extracted from the registration plate (16) with the vehicle registration number (18) extracted from the barcode (14) to thereby determine whether the vehicle registration number (18) indicated on the registration plate (16) is the same as the vehicle registration number encoded on the barcode (14).

## Patentansprüche

1. Fahrzeugidentifikationssystem, das aufweist:
ein Nummernschild (16), das an einem Fahrzeug (100) befestigt werden kann und alphanumerische Zeichen aufweist, die eine Fahrzeugzulassungsnummer (18) angeben;
einen Barcode (14), der an einem Fahrzeug befestigt werden kann, wobei der Barcode (14) die Fahrzeugzulassungsnummer (18) des Nummernschilds (16) codiert und eine Prüfsumme (36, 38) aufweist, um zu verifizieren, dass die
Fahrzeugzulassungsnummer (18) korrekt aus dem Barcode (14) ausgelesen wurde,
eine Kamera (12), die zum Aufzeichnen des Nummernschilds (16) und des Barcodes (14) in einem oder in mehreren Bildern ausgebildet ist; und
einen Analysator, der ausgebildet ist, das eine oder die mehreren Bilder zu empfangen und die Fahrzeugzulassungsnummer (18) aus dem in dem einen oder den mehreren Bildern dargestellten Nummernschild (16) automatisch zu gewinnen, die Fahrzeugzulassungsnummer (18) aus dem in dem einen oder
den mehreren Bildern dargestellten Barcode (14) automatisch zu gewinnen; und die Prüfsumme (36, 38) zu verwenden, um zu verifizieren, dass die Fahrzeugzulassungsnummer (18) korrekt aus dem Barcode (14) ausgelesen wurde,
wobei der Analysator die aus dem Nummernschild (16) gewonnene Fahrzeugzulassungsnummer (18) mit der aus dem Barcode (14) gewonnenen Fahrzeugzulassungsnummer (18) vergleicht, um dadurch zu bestimmen, ob die an dem Nummernschild angegebene Fahrzeugzulassungsnummer (18) mit der am Barcode (14) codierten Fahrzeugzulassungsnummer (18) übereinstimmt,
worin:
der Barcode (14) Fehlerkorrekturbits für die Fehlerkorrektur von sowohl der Fahrzeugzulassungsnummer (18) als auch der Prüfsumme (36, 38) umfasst; und
der Analysator zur Fehlerkorrektur von sowohl der Fahrzeugzulassungsnummer (18) als auch der Prüfsumme (36, 38) unter Verwendung der Fehlerkorrekturbits ausgebildet ist.

2. Fahrzeugidentifikationssystem nach Anspruch 1, wobei der Barcode (14) ein zweidimensionaler Barcode ist.

3. Fahrzeugidentifikationssystem nach einem der vorhergehenden Ansprüche, wobei in dem Barcode (14) die Fahrzeugzulassungsnummer (18) durch einen reversiblen Algorithmus codiert ist, der einer jeden Fahrzeugzulassungsnummer (18) eine eindeutige Identifikationsnummer zuweist, wobei die eindeutige Identifikationsnummer in dem Barcode (14) codiert ist, und der Analysator dazu ausgebildet ist, den Algorithmus auf die aus dem Barcode (14) gewonnene, eindeutige Identifikationsnummer anzuwenden, um die Fahrzeugzulassungsnummer (18) zu erstellen.

4. Fahrzeugidentifikationssystem nach Anspruch 3, wobei die Identifikationsnummer 32 Bit hat.

5. Fahrzeugidentifikationssystem nach Anspruch 1, wobei die codierte Fahrzeugzulassungsnummer (18) in zwei oder mehr Wörter aufgeteilt ist, wobei jedes Wort eine eigene Fehlerkorrektur aufweist und die Wörter über zwei oder mehr Zeilen des zweidimensionalen Barcodes angeordnet sind.

6. Fahrzeugidentifikationssystem nach Anspruch 5, wobei zumindest ein Wort auf zwei Zeilen des zweidimensionalen Barcodes aufgeteilt und so angeordnet ist, dass kein Teil des Wortes vertikal an einem Teil von sich selbst ausgerichtet ist.

7. Fahrzeugidentifikationssystem nach einem der vorhergehenden Ansprüche, wobei der Barcode (14) mehrere Taktsektionen aufweist.

8. Fahrzeugidentifikationssystem nach einem der vorhergehenden Ansprüche, wobei der Barcode (14) auch einen geographischen Identifikator, der einen Registrierungsort angibt, und/oder einen Fahrzeugklassenidentifikator codiert, der eine Klasse des Fahrzeugs (100) angibt.

9. Fahrzeugidentifikationssystem nach einem der vorhergehenden Ansprüche, wobei der Barcode (14) getrennt von dem Nummernschild (16) vorliegt.

10. Verfahren zum Identifizieren eines Fahrzeugs, das ein Nummernschild (16) mit alphanumerischen Zeichen, die eine Fahrzeugzulassungsnummer (18) angeben, und einen Barcode (14) aufweist, der die Fahrzeugzulassungsnummer (18) codiert und eine Prüfsumme (36, 38) und Fehlerkorrekturbits umfasst, wobei das Verfahren umfasst:
Aufzeichnen des Nummernschilds (16) und des Barcodes (14) in einem oder in mehreren Bildern unter Verwendung einer Kamera (12), die sowohl das Nummernschild (16) als auch den Barcode (14) aufzeichnet;
Analysieren des einen oder der mehreren Bilder, um aus dem Bild des Nummernschilds (16) die Fahrzeugzulassungsnummer (18) zu gewinnen;
Gewinnen der Fahrzeugzulassungsnummer (18) aus dem in dem einen oder den mehreren Bildern dargestellten Barcode (14);
Verwenden der Prüfsumme (36, 38), um zu verifizieren, dass die Fahrzeugzulassungsnummer (18) korrekt aus dem Barcode (14) ausgelesen wurde;
Verwenden der Fehlerkorrekturbits für die Fehlerkorrektur von sowohl der Fahrzeugzulassungsnummer (18), die aus dem Barcode (14) gewonnen wurde, als auch der Prüfsumme (36, 38); und
Vergleichen der aus dem Nummernschild (16) gewonnenen Fahrzeugzulassungsnummer (18) mit der aus dem Barcode (14) gewonnenen Fahrzeugzulassungsnummer (18), um dadurch zu bestimmen, ob die an dem Nummernschild (16) angegebene Fahrzeugzulassungsnummer (18) mit der am Barcode (14) codierten Fahrzeugzulassungsnummer übereinstimmt.

## Revendications

1. Système d'identification de véhicule comprenant :
une plaque d'immatriculation (16) pouvant être montée sur un véhicule (100) et ayant des caractères alphanumériques indiquant un numéro d'immatriculation (18) du véhicule ;
un code à barres (14) pouvant être monté sur un véhicule, le code à barres (14) codant le numéro d'immatriculation (18) du véhicule de la plaque d'immatriculation (16) et incluant une somme de contrôle (36, 38) pour vérifier que le numéro d'immatriculation de véhicule (18) a été correctement lu du code à barres (14),
une caméra (100) agencée pour enregistrer dans une ou plusieurs image(s) la plaque d'immatriculation (16) et le code à barres (14) ; et
un analyseur agencé pour recevoir une ou plusieurs images précités et pour extraite automatiquement le numéro d'immatriculation (18) du véhicule de la plaque d'immatriculation (16) représentée dans une ou plusieurs images précitées, pour extraire automatiquement le numéro d'immatriculation (18) du véhicule du code à barres (14) représenté dans une ou plusieurs images précitées ; et pour utiliser la somme de contrôle (36, 38) pour vérifier que le numéro d'immatriculation (18) du véhicule a été correctement lu du code à barres (14),
l'analyseur comparant le numéro d'immatriculation (18) du véhicule extrait de la plaque d'immatriculation (16) avec le numéro d'immatriculation (18) du véhicule extrait du code à barres (14) pour déterminer ainsi si le numéro d'immatriculation (18) du véhicule indiqué sur la plaque d'immatriculation est le même que le numéro d'immatriculation (18) du véhicule codé sur le code à barres (14),
où :
le code à barres (14) inclut des bits de correction d'erreur pour la correction d'erreurs à la fois du numéro d'immatriculation (18) du véhicule et de la somme de contrôle (36, 38) ; et
l'analyseur est agencé pour corriger l'erreur à la fois du numéro d'immatriculation (18) du véhicule et de la somme de contrôle (36, 38) en utilisant les bits de correction d'erreur.

2. Système d'identification de véhicule selon la revendication 1, dans lequel le code à barres (14) est un code à barres bidimensionnel.

3. Système d'identification de véhicule selon l'une quelconque des revendications précédentes, dans lequel le numéro d'immatriculation (18) du véhicule est code dans le code à barres (14) par un algorithme réversible qui assigne un numéro d'identification unique à chaque numéro d'immatriculation (18) de véhicule, où ce numéro d'identification unique est codé dans le code à barres (14),
et l'analyseur est agencé pour utiliser l'algorithme sur le numéro d'identification unique extrait du code à barres (14) pour produire le numéro d'immatriculation (18) du véhicule.

4. Système d'identification de véhicule selon la revendication 3, dans lequel le numéro d'identification est de 32 bits.

5. Système d'identification de véhicule selon la revendication 1, dans lequel le numéro d'immatriculation de véhicule codé (18) est divisé en deux ou plusieurs mots, chaque mot incluant une correction d'erreur séparée, et les mots agencés sur deux ou plusieurs lignes du code à barres bidimensionnel.

6. Système d'identification de véhicule selon la revendication 5, dans lequel au moins un mot est divisé entre deux lignes du code à barres bidimensionnel et agencé de telle sorte qu'aucune partie de ce mot ne soit alignée verticalement avec une partie de lui-même.

7. Système d'identification de véhicule selon l'une quelconque des revendications précédentes, dans lequel le code à barres (14) comprend une pluralité de sections d'horloge.

8. Système d'identification de véhicule selon l'une quelconque des revendications précédentes, dans lequel le code à barres (14) code également un identifiant géographique indiquant un lieu d'immatriculation et/ou un identifiant de classe de véhicule indiquant une classe du véhicule (100).

9. Système d'identification de véhicule selon l'une quelconque des revendications précédentes, dans lequel le code à barres (14) est séparé de la plaque d'immatriculation (16).

10. Procédé d'identification d'un véhicule ayant une plaque d'immatriculation (16) avec des indices alphanumériques indiquant un numéro d'immatriculation de véhicule (18), et un code à barres (14) codant le numéro d'immatriculation de véhicule et incluant une somme de contrôle (36, 38) et des bits de correction d'erreur,
le procédé comprenant :
enregistrer dans une ou plusieurs images la plaque d'immatriculation (16) et le code à barre (14) en utilisant une caméra (12) qui enregistre à la fois la plaque d'immatriculation (16) et le code à barres (14) ;
analyser une ou plusieurs images précitées pour extraire le numéro d'immatriculation de véhicule (18) de l'image de la plaque d'immatriculation (16) ;
extraite le numéro d'immatriculation de véhicule (18) du code à barres (14) représenté dans une ou plusieurs images précitées ;
utiliser la somme de contrôle (36, 38) pour vérifier que le numéro d'immatriculation de véhicule (18) a été correctement lu du code à barres (14) ;
utiliser les bits de correction d'erreur pour corriger l'erreur à la fois du numéro d'immatriculation de véhicule (18) extrait du code à barres (14) et de la somme de contrôle (36, 38) ; et
comparer le numéro d'immatriculation de véhicule (18) extrait de la plaque d'immatriculation (16) avec le numéro d'immatriculation de véhicule (18) extrait du code à barres (14) afin de déterminer ainsi si le numéro d'immatriculation de véhicule (18) indiqué sur la plaque d'immatriculation (16) est le même que le numéro d'immatriculation de véhicule codé sur le code à barres (14).
